(19) Europäisches Patentamt
European Patent Office
Office européen des brevets

(11) **EP 2 101 424 B1**

(12) **EUROPÄISCHE PATENTSCHRIFT**

(45) Veröffentlichungstag und Bekanntmachung des Hinweises auf die Patenterteilung:
**27.02.2013 Patentblatt 2013/09**

(51) Int Cl.:
*H04B 10/11* (2013.01)  *H04L 25/49* (2006.01)
*G08C 23/04* (2006.01)

(21) Anmeldenummer: **08015569.0**

(22) Anmeldetag: **03.09.2008**

(54) **Verfahren und Vorrichtung zur optischen Übertragung von Daten**

Method and device for transmitting data optically

Procédé et dispositif destinés à la transmission optique de données

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.03.2008 EP 08004419**

(43) Veröffentlichungstag der Anmeldung:
**16.09.2009 Patentblatt 2009/38**

(73) Patentinhaber: **Siemens Aktiengesellschaft**
**80333 München (DE)**

(72) Erfinder:
• **Riedl, Johannes, Dr.**
**84030 Ergolding (DE)**
• **Walewski, Joachim, Dr.**
**82008 Unterhaching (DE)**

(56) Entgegenhaltungen:
**EP-A- 1 912 354**   **WO-A-02/25842**
**WO-A-2006/123697**   **US-A1- 2006 239 689**
**US-A1- 2007 104 075**

**Beschreibung**

Die Erfindung betrifft ein Verfahren und eine Vorrichtung zur optischen Übertragung von Daten mittels einer pulsweitenmodulierten Leuchtdiode.

Die weite Verbreitung von mobilen Endgeräten, wie beispielsweise mobilen Telefonen, erfordert die schnelle Datenübertragung über drahtlose Schnittstellen und drahtlose lokale Datennetzwerke. In Gebäuden können lichtemittierende Dioden (LED) zur Beleuchtung von Räumen eingesetzt werden. Leuchtdioden zeichnen sich durch einen niedrigen Energieverbrauch, eine relativ lange Lebensdauer sowie gute Skalierbarkeit aus. Zur Beleuchtung von Räumen innerhalb von Gebäuden werden dort vorgesehene Lichtdioden gedimmt, um die Beleuchtungsstärke innerhalb eines Raumes entsprechend den jeweiligen Anforderungen einstellen zu können.

Es ist eine Aufgabe der vorliegenden Erfindung, ein Verfahren und eine Vorrichtung zur optischen Übertragung von Daten über eine dimmbare Leuchtdiode zu schaffen.

Diese Aufgabe wird erfindungsgemäß durch ein Verfahren mit den im Patentanspruch 1 angegebenen Merkmalen gelöst.

Bei einer Ausführungsform des erfindungsgemäßen Verfahrens werden die Schaltzustände der Leuchtdiode durch einen Lichtsensor sensorisch erfasst.

Dies bietet den Vorteil, dass auch ein Ausfall der Leuchtdiode bzw. eine Beeinträchtigung des von der Leuchtdiode emittierten Lichtsignals erkannt werden kann.

Bei einer Ausführungsform des erfindungsgemäßen Verfahrens werden die Daten durch eine Modulationseinrichtung auf ein pulsweitenmoduliertes Trägersignal aufmoduliert.

Dies bietet den Vorteil, dass das emittierte Lichtsignal durch das pulsweitenmodulierte Trägersignal genau einstellbar zwischen hell und dunkel dimmbar ist.

Bei einer Ausführungsform des erfindungsgemäßen Verfahrens wird das pulsweitemodulierte Trägersignal durch einen Pulsweitenmodulator aus einem Spannungsversorgungssignal in Abhängigkeit von einem einstellbaren Dimm-Steuersignal generiert.

Dies hat den Vorteil, dass das pulsweitenmodulierte Trägersignal in einfacher Weise mit geringem Schaltungstechnischer Aufwand erzeugt werden kann.

Bei einer Ausführungsform des erfindungsgemäßen Verfahrens wird mindestens eine der zu erwartenden nächsten Anschaltphasen der Leuchtdiode in Abhängigkeit von erfassten Schaltzeitpunkten des pulsweitenmodulierten Trägersignals ermittelt.

Diese Ausführungsform bietet den Vorteil, dass kein Lichtsensor zur Ermittlung der Schaltzustände vorgesehen werden muss.

Bei einer Ausführungsform des erfindungsgemäßen Verfahrens werden die Daten durch eine Modulationseinrichtung auf ein Spannungsversorgungssignal in Abhängigkeit von einem Sensorsignal eines Lichtsensors aufmoduliert.

Bei einer Ausführungsform des erfindungsgemäßen Verfahrens wird das auf das Spannungsversorgungssignal aufmodulierte Datensignal durch einen Pulsweitenmodulator in Abhängigkeit von einem einstellbaren Dimm-Steuersignal pulsweitenmoduliert.

Bei einer Ausführungsform des erfindungsgemäßen Verfahrens wird mindestens eine der zu erwartenden nächsten Anschaltphasen der Leuchtdiode in Abhängigkeit von den sensorisch erfassten Schaltzeitpunkten des von der Leuchtdiode emittierten Lichtsignals ermittelt.

Die zu übertragenden Datenpakete werden in mindestens einer Queue bzw. Datenpaketwarteschlange zwischengespeichert.

Hierdurch wird eine Toleranz bezüglich Schwankungen der Datenübertragungsraten und eine Flexibilität gegenüber unterschiedlichen Datenübertragungsraten erreicht.

Ein zwischengespeichertes Datenpaket wird erst nach fehlerfreier Übertragung aus der zugehörigen Datenpaketwarteschlange gelöscht.

Hierdurch wird vorteilhafterweise sichergestellt, dass keine Daten verloren gehen können.

Bei einer Ausführungsform des erfindungsgemäßen Verfahrens werden die Daten optisch über eine drahtlose Schnittstelle übertragen.

Dies bietet den Vorteil einer hohen elektromagnetischen Verträglichkeit und Robustheit gegenüber Störsignalen in der Umgebung.

Bei einer Ausführungsform des erfindungsgemäßen Verfahrens werden die Daten durch An- und Ausschalten der pulsweitenmodulierten Leuchtdiode auf das emittierte Lichtsignal aufmoduliert.

Hierdurch können die Daten in einfacher Weise mit geringem schaltungstechnischem Aufwand und hoher Datenübertragungsrate aufmoduliert werden.

Die Erfindung schafft ferner eine Vorrichtung zur optischen Übertragung von Daten mittels einer pulsweitenmodulierten laut Anspruch 11.

Bei einer Ausführungsform der erfindungsgemäßen Vorrichtung ermittelt die Anschaltphasenermittlungseinrichtung die Anschaltphase der Leuchtdiode in Abhängigkeit von erfassten Schaltzeitpunkten eines pulsweitenmodulierten Trägersignals, das von einem Pulsweitenmodulator aus einem Spannungsversorgungssignal in Abhängigkeit von einem einstellbaren Dimm-Steuersignal generiert wird.

Bei einer alternativen Ausführungsform der erfindungsgemäßen Vorrichtung ermittelt die Anschaltphasenermittlungseinrichtung die Anschaltphase der Leuchtdiode in Abhängigkeit von sensorisch erfassten Schaltzeitpunkten des von der Leuchtdiode emittierten Lichtsignals.

Der Stand der Technik ist aus WO 2006/123 697 bekannt.

Im Weiteren werden bevorzugte Ausführungsformen der erfindungsgemäßen Vorrichtung und des erfindungsgemäßen Verfahrens zur optischen Übertragung von Daten mittels einer pulsweitenmodulierten Leuchtdiode unter Bezugnahme auf die beigefügten Figuren zur Erläuterung erfindungswesentlicher Merkmale beschrieben.

Es zeigen:

Fig. 1        ein Blockdiagramm einer Ausführungsform der erfindungsgemäßen Vorrichtung zur optischen Übertragung von Daten mittels einer pulsweitenmodulierten Leuchtdiode;

Fig. 2        ein Ausführungsbeispiel der erfindungsgemäßen Vorrichtung zur optischen Übertragung von Daten mittels einer pulsweitenmodulierten Leuchtdiode;

Fig. 3        ein weiteres Ausführungsbeispiel einer erfindungsgemäßen Vorrichtung zur optischen Übertragung von Daten mittels einer pulsweitenmodulierten Leuchtdiode;

Fig. 4        ein Ablaufdiagramm des erfindungsgemäßen Verfahrens zur optischen Übertragung von Daten mittels einer pulsweitenmodulierten Leuchtdiode;

Fig. 5a,5b      Signaldiagramme zur Erläuterung der Funktionsweise des erfindungsgemäßen Verfahrens zur optischen Übertragung von Daten mittels einer pulsweitenmodulierten Leuchtdiode.

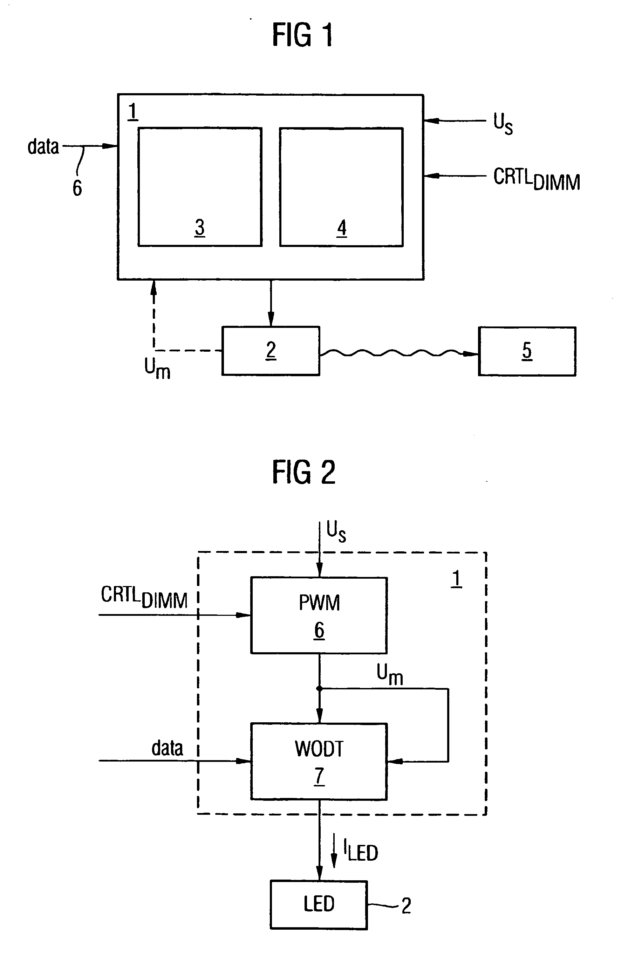

Wie man aus Fig. 1 erkennen kann, weist die erfindungsgemäße Vorrichtung 1 zur optischen Übertragung von Daten mittels einer pulsweitenmodulierten Leuchtdiode 2 eine Anschaltphasenermittlungseinrichtung 3 und eine Modulationseinrichtung 4 auf. Die Vorrichtung 1 erhält über mindestens einer Signalleitung 6 Daten, die zu der Vorrichtung 5 zu übertragen sind. Die Leuchtdiode 2 emittiert ein Lichtsignal, das drahtlos zu der weiteren Vorrichtung 5 übertragen wird. Bei der Vorrichtung 5 handelt es sich beispielsweise um eine tragbare Vorrichtung etwa um ein mobiles Telefon, ein Laptop oder um ein PDA. Die zu übertragenen Daten stammen von einer oder mehreren Datenquellen, welche die Daten direkt oder über ein Datennetzwerk zu der Vorrichtung 1 übertragen. Die Daten werden vorzugsweise in Datenpaketen übertragen, wobei das Datenformat der Datenpakete unterschiedlich sein kann. Es können beliebige Datenformate für die zu übertragenden Datenpakete verwendet werden. Bei den Datenpaketen handelt es sich beispielsweise um Ethernet-Datenpakete oder um ATM-Datenpakete. Über ein Interface erhält die Vorrichtung 1 mindestens einen Datenstrom, der aus Datenpaketen bestehen kann. Diese Datenpakete werden bei einer möglichen Ausführungsform in FIFO-Zwischenspeicher als Datenpaketwarteschlange bzw. in einer Queue zwischengespeichert. Die Vorrichtung 1 zur optischen Übertragung von Daten wird mit einer Versorgungsspannung $U_s$ versorgt. Darüber hinaus erhält die Vorrichtung 1 ein Dimmsteuersignal $CRTL_{Dimm}$ zum Dimmen der Leuchtdiode 2. Mit dem Dimmsteuersignal wird die Lichtstärke der Leuchtdiode 2 zur Beleuchtung der Umgebung eingestellt.

Die Anschaltphasenermittlungseinrichtung 3 ermittelt mindestens eine zu erwartende Anschaltphase der Leuchtdiode 2 in Abhängigkeit von einer Folge von erfassten Schaltzuständen der Leuchtdiode 2. Die Modulationseinrichtung 4 ist zum Aufmodulieren von Daten auf das von der Leuchtdiode 2 emittierte Lichtsignal vorgesehen. Dabei werden die Daten auf das emittierte Lichtsignal während der durch die Anschaltphasenermittlungseinrichtung 3 ermittelten Anschaltphasen der Leuchtdiode 2 aufmoduliert.

Zur Ermittlung der Anschaltphasen erhält die Anschaltphasenermittlungseinrichtung 3 ein Überwachungssignal $U_m$. Die Anschaltphasenermittlungseinrichtung 3 ermittelt bei einer Ausführungsform eine oder mehrere Anschaltphasen der Leuchtdiode 2 in Abhängigkeit von erfassten Schaltzeitpunkten eines pulsweitenmodulierten Trägersignals, das von einem Pulsweitenmodulator aus dem Spannungsversorgungssignal $U_s$ in Abhängigkeit von dem einstellbaren Dimm-Steuersignal $CRTL_{Dimm}$ generiert wird.

Bei einer alternativen Ausführungsform ermittelt die Anschaltphasenermittlungseinrichtung 3 die Anschaltphasen der Leuchtdiode 2 in Abhängigkeit von sensorisch erfassten Schaltzeitpunkten des von der Leuchtdiode 2 emittierten Lichtsignales. Diese Schaltzeitpunkte des Lichtsignals werden beispielsweise durch einen Photodetektor sensorisch erfasst.

Fig. 2 zeigt ein erstes Ausführungsbeispiel für eine erfindungsgemäße Vorrichtung 1 zur optischen Übertragung von Daten mittels einer pulsweitenmodulierten Leuchtdiode 2. Die Vorrichtung 1 enthält bei der Ausführungsform der Fig. 2 einen Pulsweitenmodulator 6, der ein pulsweitenmoduliertes Trägersignal generiert. Der Pulsweitemodulator 6 empfängt ein Spannungsversorgungssignal $U_s$ und generiert ein pulsweiten moduliertes Trägersignal in Abhängigkeit von einem Dimm-Steuersignal $CRTL_{Dimm}$. Das Spannungsversorgungssignal dient zur Generierung des pulsweitenmodulierten Trägersignals. Das Steuersignal $CRTL_{Dimm}$ stellt dabei das Verhältnis zwischen einer Phase, in der das pulsweitenmodulierte Signal einen logisch hohen Signalpegel aufweist, und einer Phase, in der das pulsweitenmodulierte Signal einen logisch niedrigen Signalpegel aufweist, ein.

Die Periodendauer $T_0$ des pulsweitenmodulierten Signals ergibt sich als Summe der Anschaltphase $T_{ON}$ und der Abschaltphase $T_{OFF}$: $T_0 = T_{ON} + T_{OFF}$.

Ein Dimmfaktor $\eta$ gibt das Verhältnis zwischen der Abschaltphase $T_{OFF}$ und der Periodendauer $T_0$ an:

$$\eta = \frac{T_{OFF}}{T_0}.$$

Die emittierte optische Leistung $P_{opt}$ der Leuchtdiode 2 ist proportional zu $1 - \eta$, d.h.: $P_{opt,LED} = (1- \eta) \cdot P_0$, wobei $P_0$ die übertragene optische Leistung bei einem Dimmfaktor von 0% darstellt.

Bei der in Fig. 2 dargestellten Ausführungsform werden zu erwartende Anschaltphasen der Leuchtdiode 2 in Abhängigkeit von erfassten Schaltzeitpunkten des von dem Pulsweitenmodulator 6 abgegebenen pulsweitenmodulierten Trägersignals ermittelt. Das pulsweitenmodulierte Trägersignal dient bei der in Fig. 2 dargestellten Ausführungsform als Überwachungssignal $U_m$.

Die Vorrichtung 1 enthält neben dem Pulsweitenmodulator 6 eine Modulationseinrichtung 7 zum Aufmodulieren der Daten auf ein von der Leuchtdiode 2 emittiertes Lichtsignals während der erfassten Anschaltphasen der Leuchtdiode 2. Bei der in Fig. 2 dargestellten Ausführungsform erhält die Vorrichtung 1 einen WODT(wireless optical data transmission)-Modulator 7 einer großen Modulationsbandbreite von beispielsweise bis zu 20 MHz. Die von der Leuchtdiode 2 emittierte Lichtstrahlung wird zur Veränderung des Treiberstromes $I_{LED}$ für die Leuchtdiode 2 variiert. Der WODT-Modulator 7 moduliert die Daten auf das von der Leuchtdiode 2 emittierte Lichtsignal während der ermittelten Anschaltphasen der Leuchtdiode 2 entsprechend dem Überwachungssignal $U_m$ auf. Dabei erhält der WODT-Modulator 7 die zu modulierenden Daten über eine oder mehrere Signalleitungen von entsprechenden Datenquellen, vorzugsweise paketweise. Die Daten werden vorzugsweise durch An- und Ausschalten der pulsweitenmodulierten Leuchtdiode 2 innerhalb der ermittelten Anschaltphasen der Leuchtdiode 2 aufmoduliert.

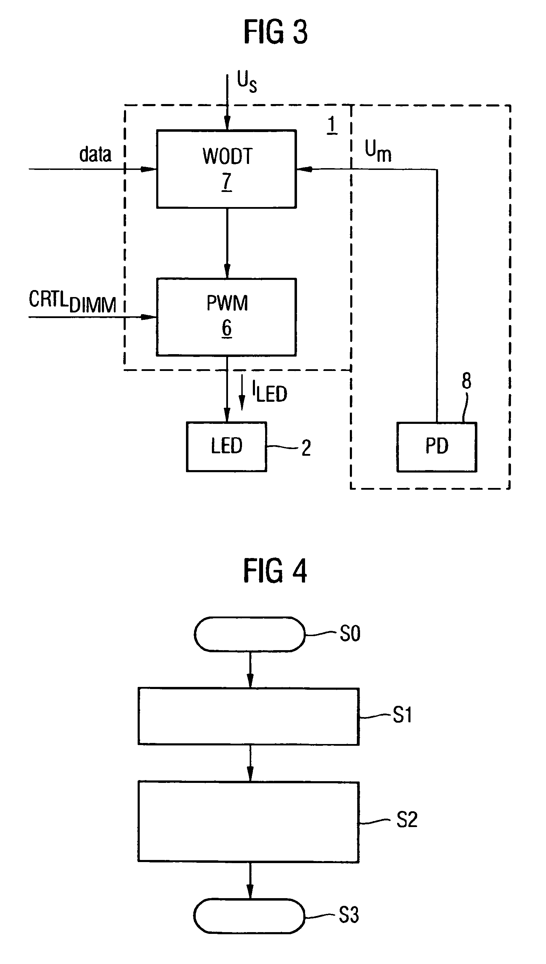

Fig. 3 zeigt eine alternative Ausführungsform der erfindungsgemäßen Vorrichtung 1 zur optischen Übertragung von Daten mittels einer pulsweitenmodulierten Leuchtdiode 2. Die Vorrichtung 1 erhält bei der in Fig. 3 dargestellten Ausführungsform ebenfalls einen WODT-Modulator 7 und einen Pulsweitenmodulator 6. Bei der in Fig. 3 dargestellten Ausführungsform wird allerdings der Pulsweitenmodulator 6 dem WODT-Modulator 7 nachgeschaltet. Darüber hinaus weist die Vorrichtung 1 bei der in Fig. 3 dargestellten Ausführungsform einen Sensor 8 auf, der die Schaltzustände der Leuchtdiode 2 sensorisch erfasst. Bei dem Sensor 8 handelt es sich beispielsweise um einen Photodetektor. Bei der dargestellten Ausführungsvariante werden die Daten durch den WODT-Modulator 7 auf das Spannungsversorgungssignal $U_s$ in Abhängigkeit von einem Sensorsignal $U_m$ des Lichtsensors 8 aufmoduliert. Anschließend wird das durch das Spannungsversorgungssignal $U_s$ aufmodulierte Datensignal durch den Pulsweitenmodulator 6 in Abhängigkeit von einem einstellbaren Dimm-Steuersignal $CRTL_{Dimm}$ pulsweitenmoduliert. Bei dem Sensor 8 kann es sich um einen beliebigen Lichtsensor, beispielsweise um eine Photodiode handeln. Bei einer möglichen Ausführungsvariante bilden der Pulsweitenmodulator 6 und die Leuchtdiode 2 ein integriertes Bauelement. In ähnlicher Weise kann es bei der in Fig. 2 dargestellten Ausführungsvariante der WODT-Modulator 7 mit der Leuchtdiode 2 ein integriertes Bauelement bilden.

Fig. 4 zeigt ein einfaches Ablaufdiagramm des erfindungsgemäßen Verfahrens zur optischen Übertragung von Daten mittels einer pulsweitenmodulierten Leuchtdiode 2. Nach dem Start im Schritt S0 werden in einem Schritt S1 zukünftige Anschaltphasen der Leuchtdiode 2 in Abhängigkeit von einer Folge von erfassten Schaltzuständen der Leuchtdiode 2 ermittelt. Diese Schaltzustände sind Schaltzustände der Leuchtdiode 2, die diese in der Vergangenheit eingenommen hat. Bei einer möglichen Ausführungsform wird mindestens eine der nächsten bzw. zukünftig zu erwartenden Anschaltphasen der Leuchtdiode 2 in Abhängigkeit von erfassten Schaltzeitpunkten eines pulsweitenmodulierten Trägersignals ermittelt. Bei einer alternativen Ausführungsform werden die nächsten zu erwartenden Anschaltphasen der Leuchtdiode 2 in Abhängigkeit von den sensorisch erfassten Schaltzeitpunkten des von der Leuchtdiode 2 emittierten Lichtsignals ermittelt. Bei einer möglichen Ausführungsform werden die Anschaltphasen in Abhängigkeit von den Schaltzeitpunkten mittels einer Berechnungseinrichtung berechnet. Bei der Berechnungseinrichtung handelt es sich beispielsweise um einen Mikroprozessor.

In einem weiteren Schritt S2 werden anschließend die zu übertragenden Daten auf ein von der Leuchtdiode 2 emittiertes Lichtsignal während der ermittelten Anschaltphasen der Leuchtdiode 2 aufmoduliert. Im Schritt S3 endet das Verfahren.

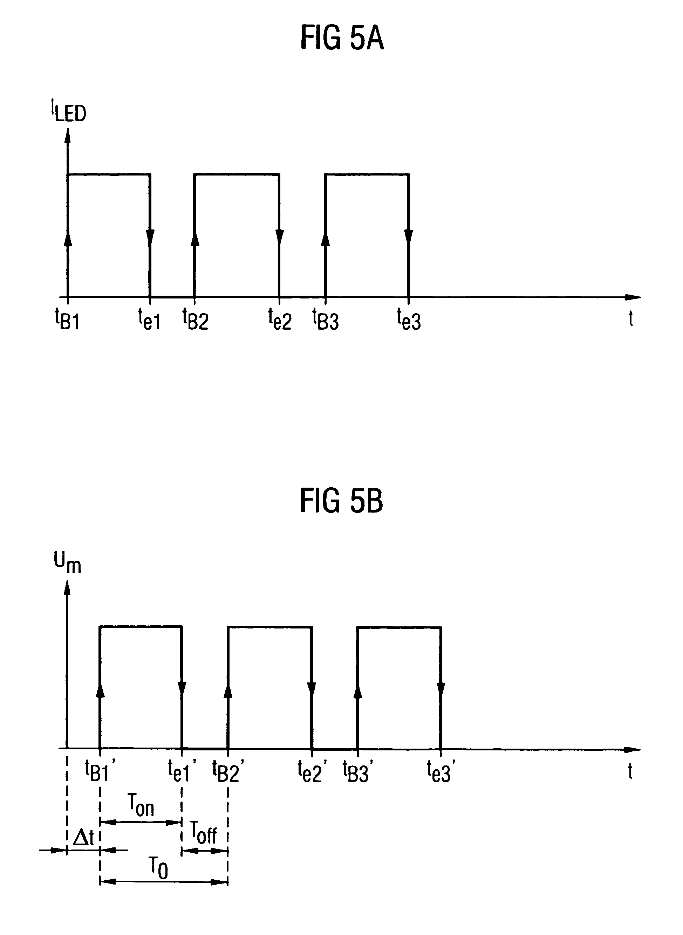

Die Figuren 5A und 5B zeigen Signaldiagramme zur Erläuterung der Vorgehensweise bei dem erfindungsgemäßen Verfahren zur Übertragung von Daten.

Fig. 5A zeigt einen Treiberstrom $I_{LED}$ für die Leuchtdiode 2.

Fig. 5B zeigt das Überwachungssignal $U_m$, das zur Ermittlung von zukünftigen Anschaltphasen der Leuchtdiode 2 dient. In dem dargestellten Beispiel sind drei Anschaltphasen der Leuchtdiode 2 dargestellt. Eine Einschaltphase beginnt zu einem Zeitpunkt $T_b$ und endet zu einem Zeitpunkt $T_e$. Der Beginn der dritten Anschaltphase der Leuchtdiode $T_{b3}$ lässt sich aus dem Überwachungssignal $U_m$ wie folgt berechnen:

Die Periodendauer $T_0$ berechnet sich bei einem konstanten Dimm-Steuersignal wie folgt:

$$T_0 = t_{b2'} - t_{b1'}.$$

Die Dauer der Anschaltphase $T_{ON}$ ergibt sich wie folgt:

$$T_{ON} = t_{e1'} - t_{b1'}.$$

Der Zeitversatz $\Delta t$ zwischen dem Stromsignal $I_{LED}$ und dem Überwachungssignal $U_m$ ist konstant und bekannt. Daher ergibt sich für den Beginnzeitpunkt der nächsten Anschaltphase, d.h. der dritten Anschaltphase:

$$t_{b3} = t_{b2'} - \Delta t + T_0.$$

Für den Endzeitpunkt der dritten bzw. nächsten Anschaltphase der Leuchtdiode gilt:

$$t_{e3} = t_{b3} + T_{ON}.$$

Bei dem erfindungsgemäßen Verfahren werden somit aus der Folge von erfassten Schaltzuständen der Leuchtdiode 2, d.h. dem Überwachungssignal, das die ersten und zweite Einschaltphase der Leuchtdiode 2 abbildet, die nächste bzw. dritten Anschaltphase der Leuchtdiode 2 ermittelt. Die zu übertragenden Daten werden dann während dieser ermittelten dritten Anschaltphase der Leuchtdiode 2 auf das Lichtsignal aufmoduliert. Ist die Zeitverzögerung $\Delta t$ vollständig bekannt oder zwar unbekannt, jedoch kürzer als die Dauer eines Datensymbols, erkennt der WODT-Modulator 7 die Beginnzeit $t_{bj}$ und die Endzeit $t_{ej}$ für jeden Abschnitt des PWM-modulierten Signals, d.h. den Anfangs- und den Endzeitpunkt der Anschaltphase. Daraus lassen sich die Beginn- und Endzeitpunkte der zukünftigen Anschaltphasen der pulsweitenmodulierten Leuchtdiode 2 berechnen. Wird nur eine Datenpaket-Queue bzw. Datentpaket-Schlange für die Vorrichtung 1 bedient, d.h. gibt es lediglich Daten einer Übertragungsklasse, können die Datenblöcke $L_1$ bis $L_i$ in der Datenpaket-Warteschlange unter Berücksichtigung folgender Bedingung gesendet werden:

$$t_{empty.j} + \frac{B_S}{M_S} \sum_{l=1}^{r_j} L_l \le t_{e,j} - t_{b,j} = T_{on.j},$$

wobei $M_s$ die Symbolrate,

$L_i$ die Bitlänge des Datenblocks bzw. des Datenpakets i, $M_s$ den dualen Logarithmus der Anzahl von Signalpegeln eines Datensymbols, $T_{on,j'}$ die Dauer der Anschaltphase eines Zeitabschnittes j, $r_j$ die höchste Paketnummer des während eines PWM-Zeitabschnittes j zu sendenden Datenpaket und $t_{empty.j}$ die Zeit in der die Warteschlange zwischen $t_{bj}$ und $t_{ej}$ leer ist darstellt.

Bei einer möglichen Ausführungsform erfolgt keine Vorabberechnung der Anschaltphasen, um während dieser Anschaltphasen die Daten auf das emittierte Lichtsignal aufzumodulieren, sondern die Übertragung der Daten erfolgt wie folgt.

Während der vermutenden Anschaltphase, d.h. zwischen dem Beginnzeitpunkt $t_{bj}$ und dem Endzeitpunkt $t_{ej}$ wird zunächst geprüft, ob sich ein Datenpaket in der Warteschlange bzw. Queue befindet. Falls dies der Fall ist, wird das Datenpaket übertragen, d.h. die Daten des Datenpakets werden während der Anschaltphase auf das von der Leuchtdiode 2 emittierte Lichtsignal aufmoduliert. Das zuletzt übertragene Datenpaket wird in dem Speicher- bzw. der Queue gehalten, bis festgestellt wird, dass die Aussendung des Datenpakets völlig abgeschlossen ist, d. h. dass während der Aussendung des Datenpakets keine Ausschaltphase aufgetreten ist. Dies ist insbesondere aufgrund der Zeitverzögerung $\Delta t$ zwischen dem optischen Ausgangssignal und dem Überwachungssignal $U_m$ notwendig. Die Datenpakete, deren Daten erfolgreich zu dem mobilen Gerät 5 übertragen wurden, können anschließend gelöscht werden. Die Datenpaketwarteschlange wird solange bedient, bis $t_{ej}$ erreicht ist. Zwischen den Zeitpunkten $t_{ej}$ und $t_{b,j+1}$ werden ankommende Datenpakete in die Datenpaketwarteschlange einsortiert und während der nächsten Anschaltphase übertragen.

Das Dimmen des Lichtsignals in Abhängigkeit von dem Dimm-Steuersignal $CRTL_{Dimm}$ hat folgende Auswirkungen auf die Datenübertragung. Falls der Dimm-Faktor $\eta$ abnimmt, nimmt die Dauer der Anschaltphase $T_{ON}$ zu. Aufgrund der zunehmenden Dauer der Anschaltphase nimmt die verfügbare Zeit zur Übertragung von Daten der Datenpakete zu, d.h. die Datenpaketübertragung wird durch den Dimmprozess nicht negativ beeinflusst. Nimmt dagegen der Dimm-Faktor $\eta$ zu, so dass die Dauer der Anschaltphase $T_{ON}$ abnimmt, kann dies zu einem Paketverlust führen. Wenn jedoch die nächste Anschaltphase erkennbar ist und das verlorengegangene Datenpaket noch verfügbar ist, d.h. der Datenpaket-Warteschlange vorrätig, kann das Datenpaket bei einer möglichen Ausführungsform während der nächsten Anschaltphase erneut übertragen werden.

Ist die Verzögerungszeit $\Delta t$ mit einer Genauigkeit $\sigma$ bekannt, kann die Übertragung unter Berücksichtigung der obigen Gleichung ebenfalls vorgenommen werden, wobei allerdings $t_{bj}$ durch $t_{bj} + n \cdot \sigma$ zu ersetzen ist, wobei $n \geq 1$ in passender Weise wählbar ist, um eine hohe Zuverlässigkeit sicherzustellen, dass die Anschaltphase des pulsweitenmodulierten Signals zu diesem Zeitpunkt begonnen hat. Analog ist $t_{ej}$ durch $t_{ej} - n \cdot \sigma$ und $T_{onj}$ mit $T_{onj} - 2n \cdot \sigma$ zu ersetzen. Je größer n gewählt wird, desto geringer ist die Wahrscheinlichkeit, dass ein Datenpaket während einer Zeit übertragen wird, in der die Leuchtdiode 2 in Wirklichkeit abgeschaltet ist. Umgekehrt darf die Zahl n nicht zu groß gewählt werden, da sonst die Effizienz der Datenübertragung zu gering wird.

Die oben beschriebene Vorgehensweise ist möglich unabhängig davon ob die Vorrichtung 1 von dem mobilen Endgerät 5 ein Rückkoppel- bzw. Feedbacksignal erhält oder nicht. Bei einer möglichen Ausführungsform erhält die Vorrichtung 1 über einen getrennten Nachrichtenübertragungskanal ein Rückkoppel- bzw. Feedback-Signal, ob ein Datenpaket vollständig übertragen worden ist oder nicht. Bei dieser Ausführungsform können die Datenpakete beispielsweise durch einen monoton ansteigenden Rahmen bzw. Paketnummer versehen sein. Darüber hinaus kann der Empfänger bzw. das mobile Gerät 5 bei einer möglichen Ausführungsform die erneute Übertragung eines fehlenden oder fehlerhaften Datenpakets verlangen.

Bei einer möglichen Ausführungsform erhält die erfindungsgemäße Vorrichtung 1 zur Übertragung von Daten Datenpakete von verschiedenen Datenquellen, die in verschiedenen Datenpaket-warteschlangen zur Übertragung anstehen. Bei dieser Ausführungsform weist die Vorrichtung 1 zusätzlich einen sogenannten "Scheduler" auf, der die verschiedenen Datenpaket-Warteschlangen bzw. Queues verwaltet. Dieser Scheduler identifiziert zwischen dem Zeitpunkt $t_{bj}$ und $t_{ej}$, welche Datenpaket-Warteschlange als nächstes zu bedienen ist. Dann prüft der Scheduler, ob ein Datenpaket in der selektierten Datenpaket-Schlange vorhanden ist oder nicht. Falls ein Datenpaket vorhanden ist, beginnt die Vorrichtung 1 mit der Übertragung von Datenpaketen von der entsprechenden Queue bzw. Datenpaket-Warteschlange. Dabei werden die zuletzt übertragenen Datenpakete solange in dem Speicher gehalten, bis eine fehlerfreie Datenpaketaussendung erfolgt ist. Es werden lediglich diejenigen Datenpakete gelöscht, deren Daten erfolgreich zu dem mobilen Endgerät 5 übertragen worden sind. Der Vorgang wird wiederholt, bis der Zeitpunkt $t_{ej}$ erreicht wird.

Zwischen den Zeitpunkten $t_{ej}$ und $t_{b,j+1}$ werden ankommende Datenpakete in den entsprechenden Datenpaket-Warteschlangen einsortiert und während der nächsten Übertragungsperiode ausgesendet.

Das erfindungsgemäße Verfahren eignet sich nicht nur zur optischen Übertragung von Daten innerhalb von Datenpaketen, sondern auch zur Übertragung von Daten kontinuierlicher Datenströme.

Bei einer möglichen Ausführungsform des erfindungsgemäßen Verfahrens wird die durchschnittliche optische Leistung des emittierten Lichtsignals bei der Modulation konstant gehalten. Bei dem erfindungsgemäßen Übertragungsverfahren kann eine hohe Datenübertragungsrate bei gleichzeitiger Dimmung der Leuchtdiode 2 erreicht werden. Im Allgemeinen können Bitraten bzw. Datenübertragungsraten im Bereich der Übertragungsrate bei Referenzleistung $P_0$ (d.h. einem Dimmfaktor von 0%) $\cdot$ einem Faktor $(1- \eta)$ erreicht werden. Beispielsweise kann bei einem Dimmfaktor von 30% sich die Datenrate 70% von derjenigen Datenrate annähern, die bei einer 100%-igen Beleuchtung erreichbar ist. Bei den zu übertragenden Daten handelt es sich um Daten beliebiger Anwendungen, beispielsweise um Multimedia-Daten, etwa für Audioanwendungen.

Das erfindungsgemäße Verfahren zur optischen Übertragung von Daten verursacht keine elektromagnetischen Wellen und kann auch nicht durch elektromagnetische Wellen beeinflusst werden. Das erfindungsgemäße Verfahren kann insbesondere dann eingesetzt werden, wenn bereits eine LED-Beleuchtung vorgesehen ist. Dabei können die Leuchtdioden beispielsweise mit Powerline adressiert werden.

Die Übertragung der Daten erfolgt mittels eines leicht abschirmbaren Kommunikationsmediums. Da die Daten optisch übertragen werden, kann man sie beispielsweise leicht mit einer Wand oder einem Vorhang abschirmen. Es kann daher eine Abhörsicherheit erreicht werden.

Bei einer möglichen Ausführungsform wird das von der Leuchtdiode 2 abgestrahlte Lichtsignal kegelförmige ausgerichtet. Hierdurch lässt sich eine relativ kleine Zellgröße bilden, die eine individuelle und hoch-bit-ratige Kommunikation ermöglicht. Das erfindungsgemäße Verfahren erlaubt die sichere optische Übertragung von Daten über eine dimmbare Leuchtdiode 2 zu tragbaren Endgeräten 5 innerhalb eines beleuchteten Raumes und ist unempfindlich gegenüber Funksignalen. Es können beliebige Leuchtdioden 2 eingesetzt werden, beispielsweise Leuchtdioden, die ein weißes Licht erzeugen. Auch Lichtdioden mit einer geringeren Modulationsbandbreite als weiße Leuchtdioden können eingesetzt werden.

## Patentansprüche

1. Verfahren zur optischen Übertragung von Daten mittels einer pulsweitenmodulierten Leuchtdiode (2) mit den Schritten:

   (a) Ermitteln (S1) von Anschaltphasen der Leuchtdiode (2) in Abhängigkeit von einer Folge von erfassten Schaltzuständen der Leuchtdiode (2); und
   (b) Aufmodulieren (S2) der Daten auf ein von der Leuchtdiode (2) emittiertes Lichtsignal während der ermittelten Anschaltphasen der Leuchtdiode (2),

   wobei die Daten in Datenpaketen übertragen werden,
   die zu übertragenden Datenpakete in mindestens einer Datenpaketwarteschlange zwischengespeichert werden, und ein zwischengespeichertes Datenpaket erst nach fehlerfreier Übertragung seiner Daten aus der Datenpaketwarteschlange gelöscht wird.

2. Verfahren nach Anspruch 1,
   wobei die Schaltzustände der Leuchtdiode (2) durch einen Lichtsensor (8) sensorisch erfasst werden.

3. Verfahren nach einem der Ansprüche 1 oder 2,
   wobei die Daten durch eine Modulationseinrichtung (7) auf ein pulsweitenmoduliertes Trägersignal aufmoduliert werden.

4. Verfahren nach Anspruch 3,
   wobei das pulsweitenmodulierte Trägersignal durch einen Pulsweitenmodulator (6) aus einem Spannungsversorgungssignal ($U_s$) in Abhängigkeit von einem einstellbaren Dimm-Steuersignal ($CRTL_{Dimm}$) generiert wird.

5. Verfahren nach Anspruch 4,
   wobei eine zu erwartende Anschaltphase der Leuchtdiode (2) in Abhängigkeit von erfassten Schaltzeitpunkten des pulsweitenmodulierten Trägersignals ermittelt wird.

6. Verfahren nach einem der Ansprüche 1 oder 2,
   wobei die Daten durch eine Modulationseinrichtung (7) auf ein Spannungsversorgungssignal ($U_s$) in Abhängigkeit von einem Sensorsignal eines Lichtsensors (8) aufmoduliert werden.

7. Verfahren nach Anspruch 6,
   wobei das auf das Spannungsversorgungssignal ($U_s$) aufmodulierte Datensignal durch einen Pulsweitenmodulator (6) in Abhängigkeit von einem einstellbaren Dimm-Steuersignal ($CRTL_{Dimm}$) pulsweitenmoduliert wird.

8. Verfahren nach Anspruch 7,
   wobei eine zu erwartende Anschaltphase der Leuchtdiode (2) in Abhängigkeit von den sensorisch erfassten Schaltzeitpunkten des von der Leuchtdiode (2) emittierten Lichtsignals ermittelt wird.

9. Verfahren nach Anspruch 1-8,
   wobei die Daten drahtlos zu einem mobilen Endgerät (5) übertragen werden.

10. Verfahren nach einem der vorangehenden Ansprüche 1-9,
    wobei die Daten durch An- und Ausschalten der pulsweitenmodulierten Leuchtdiode (2) auf das Lichtsignal aufmoduliert werden.

**11.** Vorrichtung zur optischen Übertragung von Daten mittels einer pulsweitenmodulierten Leuchtdiode (2) mit:

(a) einer Anschaltphasenermittlungs-Einrichtung (3) zum Ermitteln mindestens einer Anschaltphase der Leuchtdiode (2) in Abhängigkeit von einer Folge von erfassten Schaltzuständen der Leuchtdiode (2); und mit
(b) einer Modulations-Einrichtung (4) zum Aufmodulieren der Daten auf ein von der Leuchtdiode (2) emittiertes Lichtsignal während der ermittelten Anschaltphase der Leuchtdiode (2), wobei die Vorrichtung dazu eingerichtet ist, daß

die Daten in Datenpaketen übertragen werden,
die zu übertragenden Datenpakete in mindestens einer Datenpaketwarteschlange zwischengespeichert werden, und ein zwischengespeichertes Datenpaket erst nach fehlerfreier Übertragung seiner Daten aus der Datenpaketwarteschlange gelöscht wird.

**12.** Vorrichtung nach Anspruch 11,
wobei die Anschaltphasenermittlungs-Einrichtung (3) die Anschaltphase der Leuchtdiode (2) in Abhängigkeit von erfassten Schaltzeitpunkten eines pulsweitenmodulierten Trägersignals ermittelt, das von einem Pulsweitenmodulator (6) aus einem Spannungsversorgungssignal ($U_s$) in Abhängigkeit von einem einstellbaren Dimm-Steuersignal ($CRTL_{Dimm}$) generiert wird.

**13.** Vorrichtung nach Anspruch 11,
wobei die Anschaltphasenermittlungs-Einrichtung (3) die Anschaltphase der Leuchtdiode (2) in Abhängigkeit von Schaltzeitpunkten des von der Leuchtdiode (2) emittierten Lichtsignals ermittelt, die durch einen Lichtsensor (8) sensorisch erfasst werden.

**Claims**

**1.** Method for the optical transmission of data by means of a pulse width modulated light emitting diode (2) with the steps:

(a) Determination (S1) of switch-on phases of the light emitting diode (2) depending on a series of detected switching states of the light emitting diode (2); and
(b) Modulation (S2) of the data onto a light signal emitted by the light emitting diode (2) during the determined switch-on phases of the light emitting diode (2),

wherein the data are transmitted in data packets,
the data packets to be transmitted are buffered in at least one data packet waiting list,
and a buffered data packet is only deleted from the data packet waiting list when its data have been transmitted without errors.

**2.** Method according to claim 1,
wherein the switching states of the light emitting diode (2) are sensed by a light sensor (8).

**3.** Method according to one of claims 1 or 2,
wherein the data are modulated onto a pulse width modulated carrier signal by means of a modulation unit (7).

**4.** Method according to claim 3,
wherein the pulse width modulated carrier signal is generated by a pulse width modulator (6) from a voltage supply signal ($U_s$) as a function of an adjustable dimming control signal ($CRTL_{Dimm}$).

**5.** Method according to claim 4,
wherein an expected switch-on phase of the light emitting diode (2) is determined depending on detected switching times of the pulse width modulated carrier signal.

**6.** Method according to one of claims 1 or 2,
wherein the data are modulated by means of a modulation unit (7) onto a voltage supply signal ($U_s$) depending on a sensor signal of a light sensor (8).

**7.** Method according to claim 6,

wherein the data signal modulated onto the voltage supply signal ($U_s$) is pulse width modulated by a pulse width modulator (6) as a function of an adjustable dimming control signal (CRTL$_{Dimm}$).

8. Method according to claim 7,
wherein an expected switch-on phase of the light emitting diode (2) is determined depending on the sensed switching times of the light signal emitted by the light emitting diode (2).

9. Method according to claim 1-8,
wherein the data are transmitted wirelessly to a mobile terminal device (5).

10. Method according to one of claims 1-9,
wherein the data are modulated onto the light signal by switching on and switching off the pulse width modulated light emitting diode (2).

11. Device for the optical transmission of data by means of a pulse width modulated light emitting diode (2) having:

(a) a switch-on phase determination unit (3) for determining at least one switch-on phase of a light emitting diode (2) depending on a series of detected switching states of the light emitting diode (2); and having
(b) a modulation unit (4) for modulating the data onto a light signal emitted by the light emitting diode (2) during the determined switch-on phase of the light emitting diode (2), wherein the device is set up so that

the data are transmitted in data packets,
the data packets to be transmitted are buffered in at least one data packet waiting list, and a buffered data packet is only deleted from the data packet waiting list when its data have been transmitted without errors.

12. Device according to claim 11,
wherein the switch-on phase determination unit (3) determines the switch-on phase of the light emitting diode (2) depending on detected switching times of a pulse width modulated carrier signal which is generated by a pulse width modulator (6) from a voltage supply signal ($U_s$) as a function of an adjustable dimming control signal (CRTL$_{Dimm}$).

13. Device according to claim 11,
wherein the switch-on phase determination unit (3) determines the switch-on phase of the light emitting diode (2) depending on switching times of the light signal emitted by the light emitting diode (2) which are sensed by a light sensor (8).


**Revendications**

1. Procédé de transmission optique de données au moyen d'une diode électroluminescente (2) modulée en largeur d'impulsions, comprenant les étapes :

(a) détermination (S1) de phases de mise en marche de la diode électroluminescente (2) en fonction d'une succession d'états de commutation détectés de la diode électroluminescente (2) ; et
(b) modulation (S2) des données sur un signal lumineux émis par la diode électroluminescente (2) pendant les phases de mise en marche de la diode électroluminescente (2) déterminées,
les données étant transmises en paquets de données, les paquets de données à transmettre étant temporairement enregistrés dans au moins une file d'attente de paquets de données et un paquet de données temporairement enregistré n'étant effacé de la file d'attente de paquets de données qu'après la transmission sans erreur de ses données.

2. Procédé selon la revendication 1, les états de commutation de la diode électroluminescente (2) étant saisis par capteur au moyen d'un capteur de lumière (8).

3. Procédé selon l'une des revendications 1 ou 2, les données étant modulées sur un signal porteur modulé en largeur d'impulsions au moyen d'un dispositif de modulation (7).

4. Procédé selon la revendication 3, le signal porteur modulé en largeur d'impulsions étant généré au moyen d'un modulateur en largeur d'impulsions (6) à partir d'un signal d'alimentation en tension ($U_s$) en fonction d'un signal de commande d'atténuation ($CRTL_{Dimm}$) réglable.

5. Procédé selon la revendication 4, une phase prévisible de mise en marche de la diode électroluminescente (2) étant déterminée en fonction d'instants de commutation détectés du signal porteur modulé en largeur d'impulsions.

6. Procédé selon l'une des revendications 1 ou 2, les données étant modulées sur un signal d'alimentation en tension ($U_s$) au moyen d'un dispositif de modulation (7) en fonction d'un signal de capteur d'un capteur de lumière (8).

7. Procédé selon la revendication 6, le signal de données modulé sur le signal d'alimentation en tension ($U_s$) étant modulé en largeur d'impulsions au moyen d'un modulateur en largeur d'impulsions (6) en fonction d'un signal de commande d'atténuation ($CRTL_{Dimm}$) réglable.

8. Procédé selon la revendication 7, une phase prévisible de mise en marche de la diode électroluminescente (2) étant déterminée en fonction des instants de commutation, saisis par capteur, du signal lumineux émis par la diode électroluminescente (2).

9. Procédé selon les revendications 1-8, les données étant transmises sans fil vers un terminal mobile (5).

10. Procédé selon l'une des revendications précédentes 1-9, les données étant modulées sur le signal lumineux grâce à la mise en marche et à l'arrêt de la diode électroluminescente (2) modulée en largeur d'impulsions.

11. Dispositif de transmission optique de données au moyen d'une diode électroluminescente (2) modulée en largeur d'impulsions, comprenant :

(a) un dispositif (3) de détermination de phases de mise en marche pour déterminer au moins une phase de mise en marche de la diode électroluminescente (2) en fonction d'une succession d'états de commutation détectés de la diode électroluminescente (2) ; et comprenant
(b) un dispositif de modulation (4) pour moduler les données sur un signal lumineux émis par la diode électroluminescente (2) pendant la phase de mise en marche de la diode électroluminescente (2) déterminée,
le dispositif étant réglé pour que les données soient transmises en paquets de données, que les paquets de données à transmettre soient temporairement enregistrés dans au moins une file d'attente de paquets de données et qu'un paquet de données temporairement enregistré ne soit effacé de la file d'attente de paquets de données qu'après la transmission sans erreur de ses données.

12. Dispositif selon la revendication 11, le dispositif (3) de détermination de phases de mise en marche déterminant la phase de mise en marche de la diode électroluminescente (2) en fonction d'instants de commutation détectés d'un signal porteur modulé en largeur d'impulsions qui est généré par un modulateur en largeur d'impulsions (6) à partir d'un signal d'alimentation en tension ($U_s$) en fonction d'un signal de commande d'atténuation ($CRTL_{Dimm}$) réglable.

13. Dispositif selon la revendication 11, le dispositif (3) de détermination de phases de mise en marche déterminant la phase de mise en marche de la diode électroluminescente (2) en fonction d'instants de commutation du signal lumineux émis par la diode électroluminescente (2) qui sont saisis par capteur au moyen d'un capteur de lumière (8).

# FIG 1

# FIG 2

# FIG 3

$U_S$

data → | WODT $\underline{7}$ | $\underline{1}$    $U_m$

$CRTL_{DIMM}$ → | PWM $\underline{6}$ |

$I_{LED}$

| LED | ~2

| PD | 8

# FIG 4

S0

S1

S2

S3

# FIG 5A

# FIG 5B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006123697 A